# EUROPEAN PATENT APPLICATION

(11) **EP 1 528 801 A1**
(43) Date of publication of application: **04.05.2005**
(21) Application number: 03300182.7
(22) Date of filing: 29.10.2003
(51) Int. Cl.: H04N 5/65, G06F 1/16

(54) **Display apparatus with shielding**

(71) Applicant: Thomson Licensing S.A., 92100 Boulogne-Billancourt (FR)
(72) Inventor: Allaire, Christian, 49800 La Daguenière (FR); Delande, Laurent, 49610 St Mélaine/Aubance (FR); Restif, Roger, 49170 St Leger des bois (FR); Ros, André, 49000 Angers (FR)
(74) Representative: Rossmanith, Manfred, Dr.

(57) **Abstract**

A video display apparatus is provided. The apparatus comprises a display device mounted in a housing and having a face plate (1). A detachable shielding (2) is mounted in front of the face plate (1). In one embodiment means (4) for detaching the shielding (2) are provided.

## Description

The invention is related to a display apparatus comprising a display device mounted in a housing and having a face plate. The surface of the face plate of a current display apparatus is usually provided with coatings to reduce reflexions and to harden its surface against scratches or other mechanical disturbances. For projection displays the face plate additionally also includes optical elements to achieve the desired image quality.

It is known in the art e.g. from JP 2000-182519 to provide a display with a protective and/or decorative screen shield to protect the screen against scratches, contamination and any other environmental influences being detrimental to the picture quality. The screen shield can also be tinted to improve the contrast of the picture especially in the presence of bright daylight. In order to maintain a superior surface quality or to adapt the tint of the protective screen it is desirable to arrange the protective shield on the display in a detachable manner. This enables the user to replace the currently used protective screen by a new one or by one having a different tint.

In consequence, it is desirable to provide a display apparatus equipped with a shielding which is easily mountable and unmountable. In addition, it is preferable if the aesthetic impression of the display apparatus is not impaired.

The invention suggests a display apparatus to respond to these needs.

The inventive videodisplay apparatus comprises a display device mounted in a housing and having a face plate. A shielding is mounted in front of the face plate in a detachable manner allowing an easy replacement or exchange of the shielding. In an advantageous embodiment of the invention the shielding is transparent. It is convenient if means for detaching the shielding are provided. In a particular embodiment of the invention the means for detaching comprise a rotatable cam. In addition, the means for detaching may comprise a base plate bearing the rotatable cam. A lever may be drivingly connected to the rotatable cam for rotating the cam. With regard to the appearance of the apparatus it is advantageous to accommodate the lever in a recess adjacent to the shielding. Preferably, the lever forms an even surface relative to a front side of the shielding or relative to a front side of the face plate.

In another embodiment of the invention the means for detaching comprise a base plate bearing the rotatable cam. The base plate may comprise a locking element locking the cam in the base plate. It is advantageous if the base plate is attached to the shielding.

In a preferred embodiment the base plate is provided with a first indexing element and the face plate with a complementary second indexing element to locate the shielding on the face plate.

An additional advantage of all embodiments of the present invention is that children cannot easily detach the shielding and thus protecting the children against any kind of injuries that may be caused if the shielding is no longer fixed on the face plate. E.g. a detached shielding could drop on a foot of a child and hurt it.

In the drawing an exemplary embodiment of the invention is illustrated. It shows:
Fig. 1 a front view of the inventive display apparatus including a protective screen;
Fig. 2 a rear view of the protective screen of Fig. 1 including exstractor mechanisms, and
Fig. 3a, and 3b details of the exstractor mechanism shown in Fig. 2.

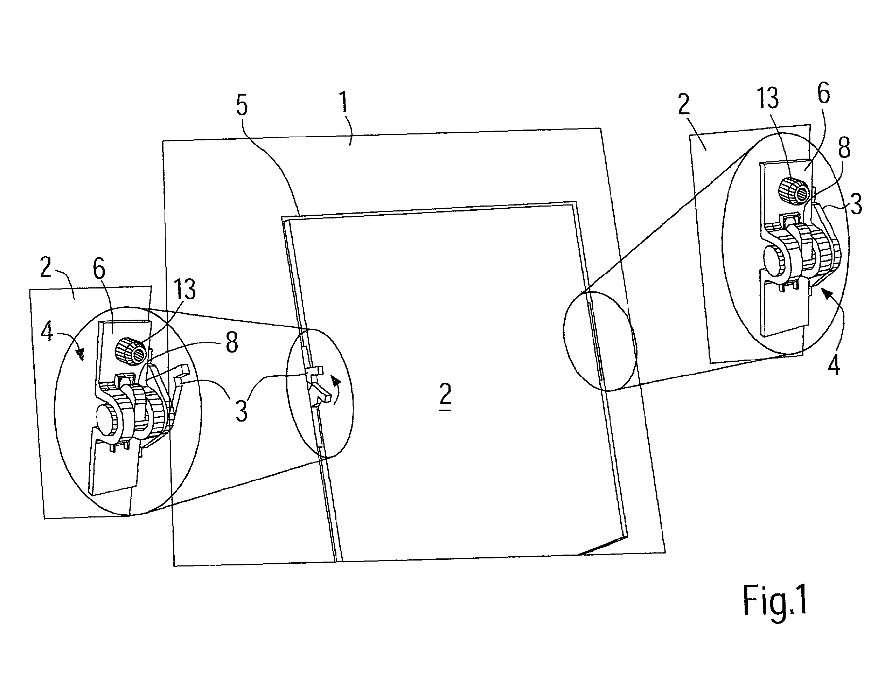

Fig. 1 shows a schematic illustration of the front view of an exemplary embodiment of the inventive video display apparatus. For the sake of simplicity the invention will be described in the following in connection with a television receiver. However, the invention is not limited to television receivers but can be incorporated in any kind of display apparatus like for example computer monitors.

Fig. 1 exhibits the front view of a face plate or front panel 1 of a television cabinet the reminder of which is not shown in the drawing. The cabinet houses the receiver and a display device like a cathode raytube (CRT), an LCD panel (liquid crystal panel), a plasma panel or the screen of a rear projector. The face plate 1 is provided with a cut-out window 5 or recess in its center portion accommodating a protective screen shield or shielding 2 in front of a face plate of the display device. The dimensions of the window 5 and the shielding are adapted to provide a flat surface across the face plate 1 and the shielding 2 as shown in Fig. 1. The flat surface makes it very difficult to remove the shielding from the recess in the face plate. Therefore, rotatable levers 3 are provided on the lateral sides of the shielding 2. When the shielding 2 is mounted, the levers 3 are aligned with the surface defined by the shielding 2 and face plate 1 as it is shown on the right side of Fig. 1. The visibility of the levers is therefore limited which is very favourable for some designs. The levers 3 are rotatable around a horizontal axis by pushing one lever arm with a finger tip to make the opposite lever arm raise above the surface of the face plate as it is illustrated in the enlarged portion on the left side of Fig. 1.

It is noted that the enlarged partial views in Fig. 1 show the respective sections of the shielding 2 from the rear.

Each lever arm 3 forms part of an extractor mechanism 4 and is effective to operate the extractor mechanism which is shown in greater detail from the rear side of the face plate and on a different scale on the left and on the right side of the face plate 1 in Fig. 1. The structure and functionality of the extractor mechanism 4 will be described in further detail below.

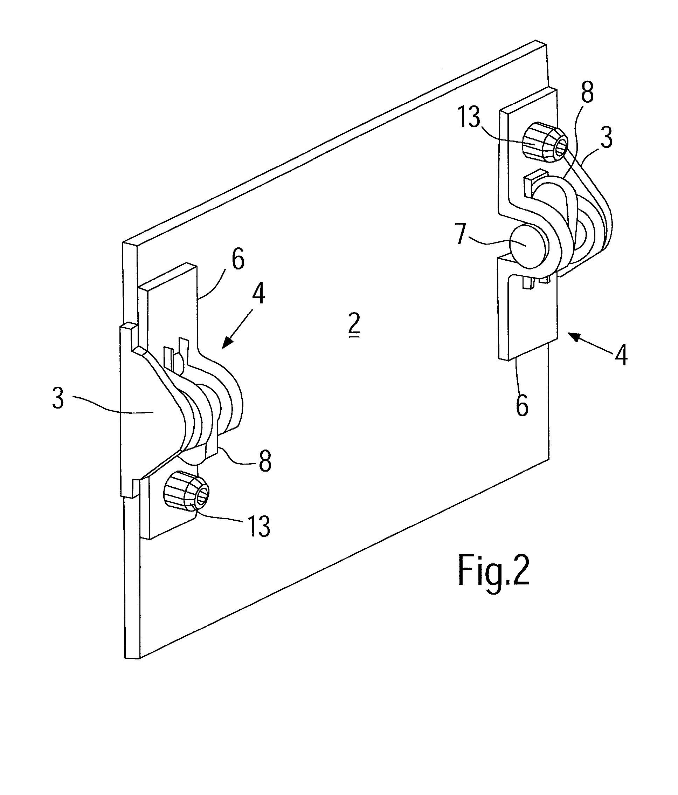

Fig. 2 illustrates the shielding 2 in the mounted position from the rear side without showing the face plate 1. In the mounted position the levers 3 are aligned with a surface of the shield 2 as it has been described with reference to Fig. 1. The extractor mechanism 4 includes a base plate 6 which is securely connected with a rear side of shield 2 e.g. by a moulding connection or by glueing. The lever 3 is arranged on a rotatable shaft 7 carrying a cam 8.

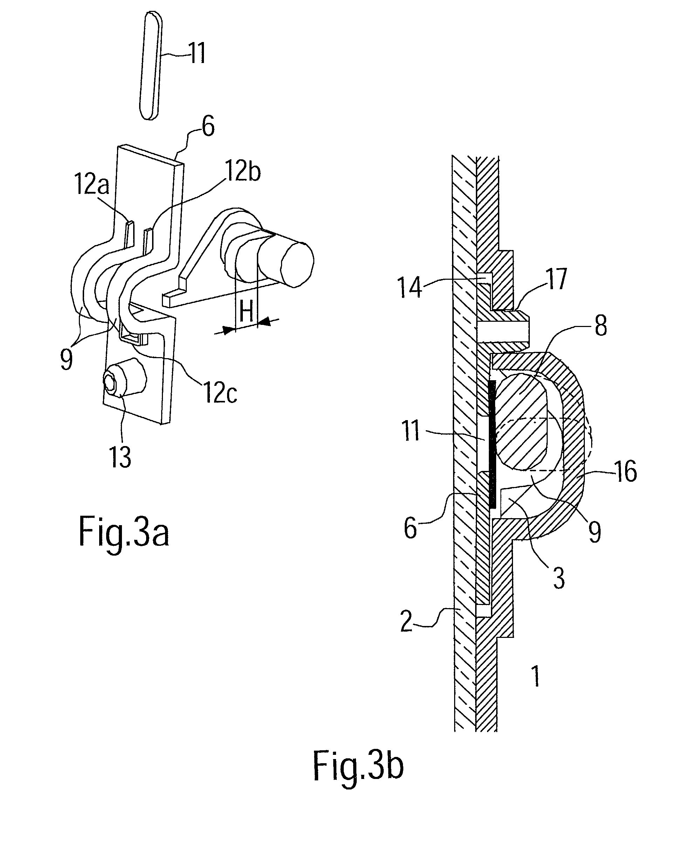

Fig. 3a displays an exploded perspective view of the extractor mechanism 4. The lever 3 is securely fixed on the shaft 7 carrying the cam 8 having a height H. For the assembly of the extractor mechanism 4 the shaft 7 is inserted under two bow 9 being part of the base plate 6. Subsequently, a locking plate 11 is inserted between the bows 9 and between the shaft 7 and the base plate 6 to form a bearing in which a shaft 7 is rotatably mounted. During the insertion the locking plate 11 is guided by a ridge having two lateral sides 12a, 12b and a front side 12c. The front side 12c is an effective abutment for the insertion of the locking plate 11. An index protrusion 13 forms part of the base plate 6.

Fig. 3b shows a sectional side view of the assembled extractor mechanism 4 mounted on the shielding 2 which itself is in the mounted position on the face plate 1. In the face plate 1 a recess 14 is provided to accommodate the base plate 6 of the extractor mechanism 4. An arcuate portion 16 of the face plate 1 covers the cam 8 and the bow 9 of the base plate 6 in close vicinity. Adjacent to the arcuate portion 16 the face plate is provided with an index aperture 17. The cooperation of the index protrusions 13 with the associated index apertures 17 secures the proper positioning of the shielding 2 on the face plate 1.

For the extraction of the shielding 2 a user turns the lever 3 and thus the cam 8 clockwise in Fig. 3b. In consequence the periphery of the cam 8 contacts the arcuate portion 16 and generates a force directed to the left side in Fig. 3b. The force urges the shielding 2 out of the recess 14 and out of the window 5 in face plate 1. Now the user can easily grasp the rim of the shielding 2 to completely remove it from the face plate 1.

For the mounting of a new shielding 2 the levers are arranged parallel to the surface of the shielding 2. Then the index protrusions 13 are aligned with the index apertures 17 and the shielding 2 is pushed into the window 5. The proper positioning of the shielding 2 is facilitated by the conical shape of the end portion of the index protrusion 13 tolerating small deviations from the exact position at the beginning of the insertion of the shielding 2.

It is noted that the present invention is not limited to embodiments, in which the face plate is located on the front side of the apparatus and the shielding 2 is not necessarily a protective screen shield.

## Claims

1. Videodisplay apparatus comprising a display device mounted in a housing and having a face plate (1), **characterized in that** a detachable shielding (2) is mounted in front of the face plate (1).

2. Videodisplay apparatus according to claim 1, **characterized in that** the shielding (2) is transparent.

3. Videodisplay apparatus according to claim 1, **characterized in that** means (4) for detaching the shielding (2) are provided.

4. Videodisplay apparatus according to claim 3, **characterized in that** the means (4) for detaching comprise a rotatable cam (8).

5. Videodisplay apparatus according to claim 4, **characterized in that** a lever (3) is drivingly connected to the rotatable cam (8) for rotating the cam.

6. Videodisplay apparatus according to claim 5, **characterized in that** the lever (3) is accommodated in a recess adjacent to the shielding (2).

7. Videodisplay apparatus according to claim 6, **characterized in that** the lever (3) forms an even surface relative to a front side of the shielding (2).

8. Videodisplay apparatus according to claim 6, **characterized in that** the lever (3) forms an even surface relative to a front side of the face plate (1).

9. Videodisplay apparatus according to claim 3, **characterized in that** the means (4) for detaching comprise a base plate (6) bearing the rotatable cam (8).

10. Videodisplay apparatus according to claim 9, **characterized in that** the base plate (6) comprises a locking element (11) locking the cam (8) in the base plate (6).

11. Videodisplay apparatus according to claim 9, **characterized in that** the base plate (6) is attached on the shielding (2).

12. Video display apparatus according to claim 9, **characterized in that** the base plate (6) is provided with a first indexing element (13) and the face plate (1) with a complementary second indexing element (17) to locate the shielding on the face plate (1).
